# EUROPEAN PATENT APPLICATION

(11) **EP 4 269 018 A1**
(43) Date of publication of application: **01.11.2023**
(21) Application number: 21911501.1
(22) Date of filing: 22.12.2021
(51) Int. Cl.: B23K 37/02, B23K 9/29, B23K 11/24, B23K 11/25, B23K 101/04

(54) **AUTOMATIC WELDING SYSTEM FOR PIPE**

(30) Priority: 22.12.2020 KR 20200180630; 24.12.2020 KR 20200183230; 21.12.2021 KR 20210183545
(71) Applicant: Weldtek Co., Ltd., Iksan-si, Jeollabuk-do 54538 (KR)
(72) Inventor: SHIN, Seong-Woo, Seoul 02602 (KR); HONG, Joung-Hwan, Changwon-si, Gyeongsangnam-do 51260 (KR)
(74) Representative: Wunderlich & Heim Patentanwälte Partnerschaftsgesellschaft mbB
(86) International application number: PCT/KR2021/019561
(87) International publication number: WO 2022/139434

(57) **Abstract**

The present invention relates to an automatic welding system for a pipe, wherein an automatic welding head having a plurality of wheels is installed on a pipe, and welding is easily performed through a welding device while the wheels are rotated along a circumferential surface of the pipe by chain driving. In the automatic welding system for a pipe, an automatic welding head 2 is rotatably installed on a pipe 1 and welding is performed with a welding machine 15, and a chain 3 is wound around and thereby installed on the pipe 1, the automatic welding head 2 is rotatably installed along the chain 3, the chain 3 is movably passed through openings 6a formed on both sides of the automatic welding head 2, the chain 3 is guided by a guide roller 11 while being wound around a gear driven to rotate by a driving motor 9 provided in the automatic welding head 2, and the pipe 1 is precisely welded using the welding machine 15 which is adjusted in position by a position adjustment unit of the automatic welding head 2 under the control of a control device while wheels 4 provided in the automatic welding head 2 rotate along the pipe 1.

## Description

### [Technical Field]

The present invention relates to an automatic welding system for a pipe, and particularly, to an automatic welding system for a pipe in which an automatic welding head having a plurality of wheels is installed on a circumferential surface of a pipe, and welding is easily performed through a welding device while the wheels are rotated along the circumferential surface of the pipe by chain driving, and a current control volume terminal of the welding machine is simply accessed and an analog output voltage value of the welding machine is sensed in real time and is automatically converted into a digital value, and the digital value is stored, and then converted into an analog value through a controller to precisely control the welding machine.

### [Background Art]

In general, a pipeline consists of a plurality of pipes having a certain diameter interconnected to form a continuous pipeline, and an installation construction of the pipeline is performed for transporting crude oil or natural gas extracted from a maritime oil or maritime gas extract facility to a land storage facility which is away from the maritime oil or maritime gas extract facility by hundreds of km or more.

Such pipeline construction may occur on land as well as at sea, and is a largescale installation work caused by location mismatch between production and consumption of crude oil or natural gas.

The pipe constituting the pipeline has an outer diameter of about 10 to 60 inches, and the longer the length, the more advantageous it is in construction, but the pipe having a length of about 12 m is used due to problems in the manufacturing process.

Since each of these pipes is interconnected through welding work, the welding work must be performed in a short time to shorten the construction period and thus reduce the construction cost.

Conventionally, after placing a straight pipe on a guide roller for automation of welding for the construction of the pipeline as described above, a flange and the straight pipe are welded using a welding device while rotating the guide roller.

However, conventionally, since a pipe to which a pipe flange is tack-welded should be seated on a pair of guide rollers disposed on both sides during welding, it is difficult to perform automatic welding between the pipe and the pipe flange because the pipe is not seated on the guide roller when a total length of the pipe to which the pipe flange is tack-welded is smaller than a gap between the guide rollers.

Therefore, the welding of the pipe where the pipe flange is tack-welded has no choice but to be performed manually, so it takes about 1 to 2 hours in the case of manual welding, compared to about 1 to 2 hours in the case of automatic welding, so there is a problem of low efficiency due to a significant difference in production volume.

In addition, a welding work through a welding machine is performed manually, which requires professional workers having a high degree of proficiency, and also has a problem in that the time required for the work is long and the cost of the welding work is high.

### [Documents of Related Art]

### [Patent Documents]

(Patent Document 1) Korean Patent Application No. 10-1998-0062118
(Patent Document 2) Korean Patent Application No. 10-2011-0083900
(Patent Document 3) Korean Patent Application No. 10-2012-0047612

### [Disclosure]

### [Technical Problem]

In order to solve the conventional drawbacks, and an object of the present invention is to provide an automatic pipe welding system that installs an automatic welding head having multiple wheels in a pipe, and allows welding to be performed while the wheel is rotated on a circumferential surface of the pipe by chain driving.

Another object of the present invention is to provide an automatic pipe welding system that accesses an existing analog welding machine, converts an analog voltage value into a digital value, stores the digital value, and then converts the digital into an analog value through control of a controller to precisely control a welding machine.

### [Technical Solution]

In order to achieve the object, in the present invention, an automatic welding head is rotatably installed on a pipe and welding is performed with a welding machine, and a chain is wound around and thereby installed on the pipe, the automatic welding head is rotatably installed along the chain, the chain is movably passed through openings formed on both sides of the automatic welding head, the chain is guided by a guide roller while being wound around a gear driven to rotate by a driving motor provided in the automatic welding head, and the pipe is precisely welded using the welding machine which is adjusted in position by a position adjustment unit of the automatic welding head under the control of a control device while wheels provided in the automatic welding head rotate along the pipe.

### [Advantageous Effects]

As described above, the present invention has an effect of installing an automatic welding head having multiple wheels in a pipe and easily welding a welded portion of the pipe while the wheel is rotated along a circumferential surface of the pipe by chain driving.

Further, the present invention has an effect in that an analog voltage value is extracted by simply connecting the present invention to a body of an analog type welding machine, and the extracted analog voltage value is converted into a digital value, and then, stored in a memory storage unit, and converted into an analog value by control of a controller to precisely control the welding machine.

### [Description of Drawings]

FIG. 1 is a diagram illustrating a state in which an automatic welding head of the present invention is installed on a pipe.
FIG. 2 is a perspective view for helping the description of FIG. 1
FIG. 3 is a perspective view of the automatic welding head of FIG. 1.
FIG. 4 is a cross-sectional view of the automatic welding head of FIG. 1.
FIG. 5 is a cross-sectional view for describing chain driving of an automatic welding device of the present invention.
FIG. 6 is a diagram for describing a structure of moving along a chain according to the present invention.
FIG. 7 is a diagram for describing another structure of moving along a chain according to the present invention.
FIG. 8 is a diagram illustrating a chain adjustment unit for adjusting the elasticity of a chain of the present invention.
FIGS. 9(a), 9(b), and 9(c) are diagrams illustrating an operating state of the chain adjustment unit of the present invention.
FIG. 10 is a diagram illustrating a state in which the chain adjustment unit is applied to the automatic welding head according to the present invention.
FIG. 11 is a perspective view illustrating a state in which a chain guide unit guiding movement of the automatic welding head is installed in the pipe along the chain according to the present invention.
FIG. 12 is a cross-sectional view of the chain movement unit according to the present invention.
FIG. 13 is a perspective view illustrating a state in which the automatic welding head moves along the chain movement unit according to the present invention.
FIG. 14 is a diagram illustrating a state in which the automatic welding head is separated vertically according to the present invention.
FIGS. 15(a) and 15(b) are diagrams illustrating a wheel and an auxiliary wheel moving along the pipe.
FIG. 16 is a block diagram of a configuration of a control device for controlling an analog welding machine according to the present invention.
FIG. 17 is a block diagram illustrating a controller of the control device according to the present invention.

### [Modes for the Invention]

Hereinafter, an embodiment of the present invention will be described below in detail with reference to the accompanying drawings.

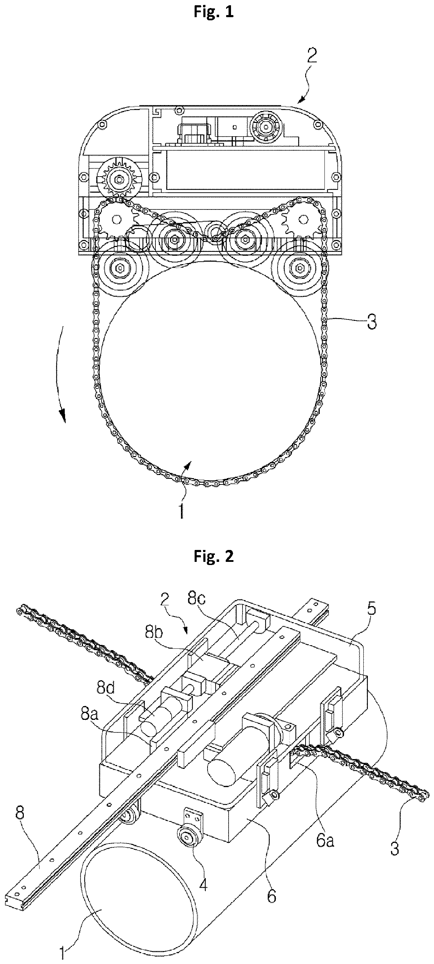

As illustrated in FIGS. 1 to 3, an automatic welding head 2 having wheels 4 of the present invention is coupled to a circumferential surface of the pipe 1 via a chain 3 and configured to weld while rotating.

The automatic welding head 2 is constituted by a substantially rectangular upper case 5 and a lower case 6 and fasteners 7 for fastening the upper and lower cases, and openings 6a are formed on both sides of the lower case 6, so the chain 3 is configured to penetrate through an opening 6a.

However, one or two openings 6a may be formed and one or two chains 3 may be used. That is, the automatic welding head 2 may be stably moved without being shaken by the two chains 3.

In addition, the opening 6a may be formed to pass through both sides of the automatic welding head 2, or may be formed on both sides from the bottom of the automatic welding head 2.

And, the present invention includes a position adjusting unit that is controlled by a controller and adjusts the position of a welding machine 15.

The position adjusting unit includes a slide rail 8 which is provided to be slidable on the automatic welding head 2 and has an end to which the welding machine 15 is fixed, a guide rail 8a moving movement of the slide rail 8, a guide block 8b fixed to one side of the slide rail 8 and having a screw hole, a screw shaft 8c coupled to the screw hole of the guide block 8b, and a moving motor 8d rotating the screw shaft 8c while being provided in the automatic welding head 2.

There is plurality of guide rails 8a, which is supported on both sides of the slide rail 8, so the slide rail 8 may be moved linearly without movement.

Therefore, since the screw shaft 8c is rotated when the moving motor 8d is rotated, the slide rail 8 is moved together with the guide block 8b, so that the position of the welding machine 15 may be accurately adjusted.

In the drawings, undescribed reference numeral 16 represents a camera for photographing a welding process together with a wire supplied to be welded and the welding machine 15, and reference numeral 17 represents a wire guide unit for guiding the wire toward the welding machine 15, and reference numeral 18 represents a wire supply unit for supplying the wire to the wire guide unit 17. The welding machine 15, the camera 16, and the wire supply unit 18 may be set to be controlled by a control device.

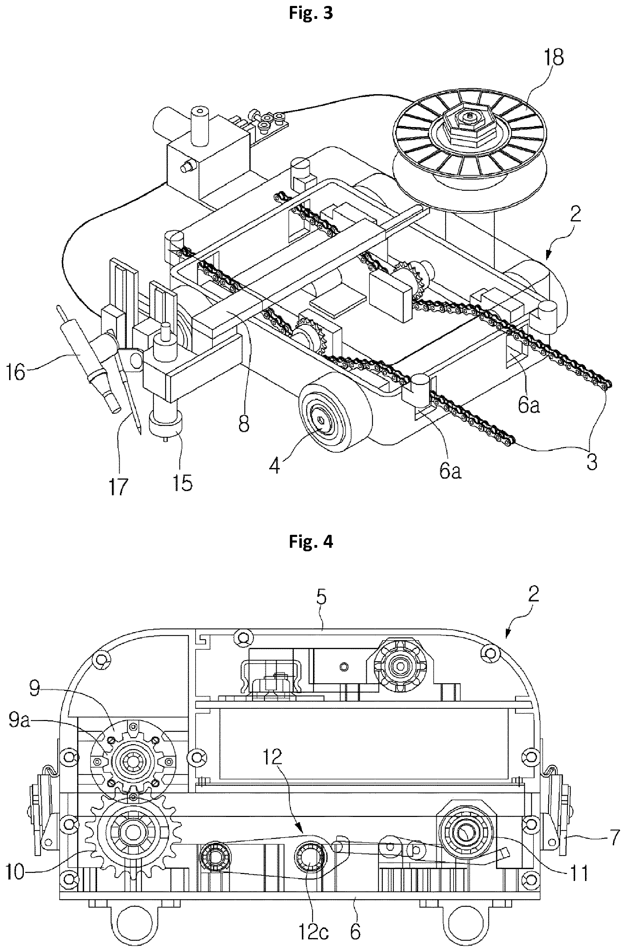

As illustrated in FIGS. 4 to 6, the automatic welding head 2 includes a driving motor 9 driven to move the chain 3, a driving gear 9a rotated by the driving motor 9, a driven gear 10 engaged with the driving gear 9a and rotating, a chain gear 10a to which the driven gear 10 is fixed jointly and on which one side of the chain 3 is wound, a guide roller 11 spaced apart from the chain gear 10a and guiding the other side of the chain 3, and a chain adjusting unit 12 pressing the chain 3 while being installed between the chain gear 10a and the guide roller 11 and adjusting to maintain a tension state.

The driving motor 9 and the driving gear 9a may be installed in an upper case 5, and the driven gear 10 and the chain gear 10a may be installed in a lower case 6. Therefore, when the upper case 5 is coupled to the lower case 6, the driving gear 9a is engaged with the driven gear 10.

The chain gear 10a is provided on one side of the automatic welding head 2, and the guide roller 11 is provided on the other side of the automatic welding head 2. Therefore, the chain 3 wound around the chain gear 10a and the guide roller 11 protrudes from both sides of the automatic welding head 2 and is wound around the pipe 1.

The driven gear 10 and the chain gear 10a are fixed together on one axis that is idlingly fixed to the automatic welding head 2. That is, the driven gear 10 and the chain gear 10a are rotated together.

In this state, when the driving motor 9 is operated and the driving gear 9a is rotated, the chain gear 10a is rotated together with the driven gear 10, so that the chain gear 10a and the guide roller 11 are rotated along the chain 3 wound around the pipe 1. Thus, the automatic welding head 2 is moved along the outer circumferential surface of the pipe 1.

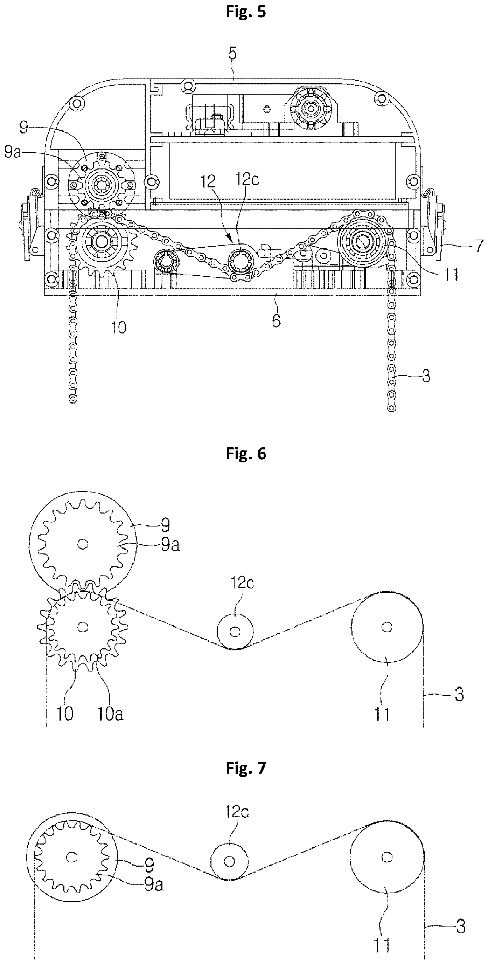

Further, as illustrated in FIG. 7, the automatic welding head 2 includes a driving motor 9 driven to move the chain 3, a driving gear 9a rotated by the driving motor 9 and on which one side of the chain 3 is wound, a guide roller 11 spaced apart from the driving gear 9a and guiding the other side of the chain 3, and a chain adjusting unit 12 pressing the chain 3 while being installed between the driving gear 9a and the guide roller 11 and adjusting to maintain the tension state. Here, as the driven gear 10 and the chain gear 10a are omitted, the structure may be simplified, thereby simplifying the manufacturing process and reducing manufacturing costs.

Therefore, while the chain 3 is wound along the outer circumferential surface of the pipe 1, the chain 3 is also wound around the driving gear 9a and the guide roller 11.

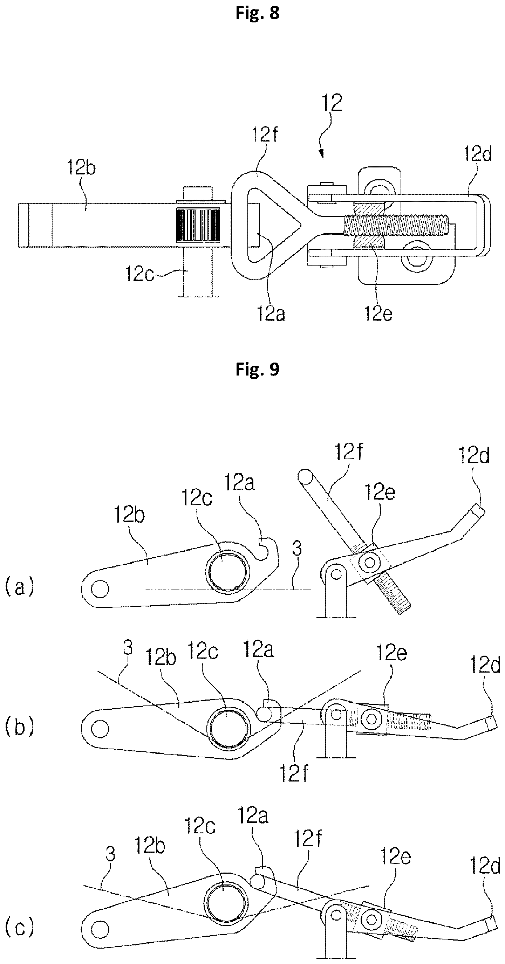

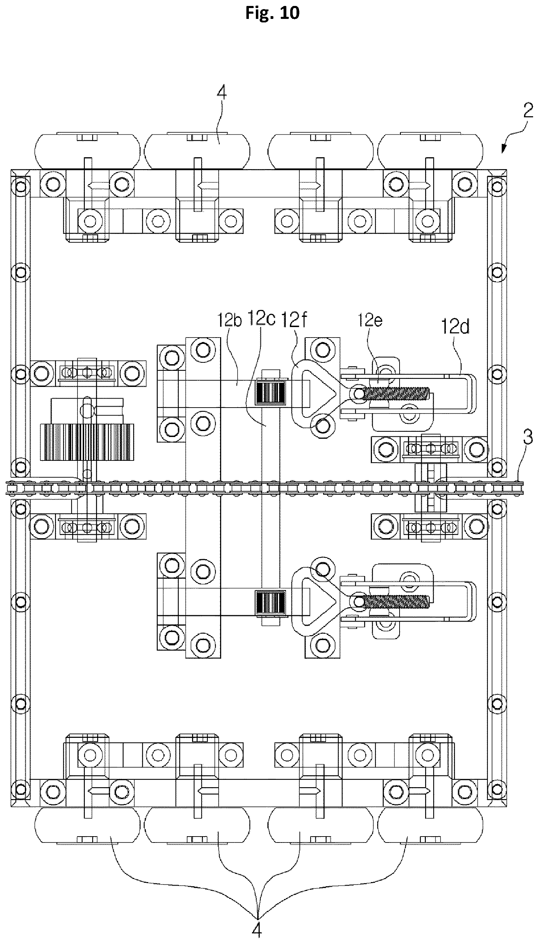

As illustrated in FIGS. 8 to 10, the chain adjusting unit 12 includes a rotating frame 12b having one end rotatably provided on one side of the automatic welding head 2 and a latch 12a formed on the other end, a chain presser 12c for pressurizing the chain 3 in a state provided in the rotating frame 12b, a handle 12d rotatably provided on the other side of the automatic welding head 2 while being spaced apart from the rotating frame 12b, a nut portion 12e rotatably provided in the handle 12d, and a locking portion 12f that is locked on the latch 12a of the rotating frame 12b in a screwed state to the nut portion 12e.

The chain presser 12c is formed in a cylindrical shape and is rotatably installed in the rotating frame 12b through a bearing or the like.

The locking portion 12f has a ring that is locked on the latch 12a at one end and a screw shaft screwed to the nut portion 12e at the other end.

The chain adjusting unit 12 is configured, which adjusts the chain 3 to be fastened and maintained not lose but tightly.

Therefore, in a state where the locking portion 12f is locked by the latch 12a, the handle 12d is rotated to fix a locking state of the locking portion 12f. In this way, the chain presser 12c presses the chain 3 to tightly adjust the chain 3 without loosening.

In addition, as the chain adjusting unit 12 is installed on both sides of the chain 3 and both ends of the chain presser 12c are rotatably fixed to the rotating frames 12b, the chain presser 12c may accurately press the chain 3 while not biased to either side.

Further, when the locking portion 12f is loosened from the nut portion 12e, the length of the locking portion 12f is increased in the nut portion 12e, and when the locking portion 12f is tightened to the nut portion 12e, the length of the locking portion 12f is reduced in the nut portion 12e. That is, even if the chain 3 is applied to the pipe 1 having a large or small diameter by adjusting the length of the locking portion 12f, the chain 3 may always be maintained in a tightening state.

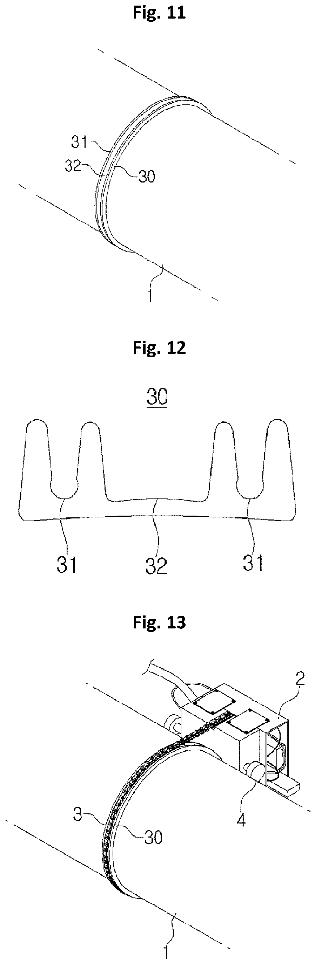

As illustrated in FIGS. 11 to 13, the present invention includes a chain guide unit 30 that is wound around the pipe 1 and installed so that the chain 3 is wound and guided.

The chain guide unit 30 is formed in the form of a belt so as to be wound around the pipe 1, and has wire grooves 31 for winding wires on both sides, and a chain groove 32 on which the chain 3 is to be wound between the wire grooves 31.

The wire groove 31 is formed concavely in a semicircular cross section, so that a supporting area of the wire inserted and supported may be increased. The chain groove 32 is formed in a 'U' shape in cross section and a bottom surface is formed flat, so that a contact area of the chain 3 may be secured.

Therefore, when the wire is inserted into the wire groove 31 in a state where the chain guide unit 30 is wound around the pipe 1, and both ends are connected and tightened, the chain guide unit 30 may be fixed while being wound on the pipe 1. Then, the chain 3 connected to the automatic welding head 2 is wound around a chain groove 32. In this state, when the automatic welding head 2 is operated, the chain guide unit 30 is moved along the chain 3 to rotate the outside of the pipe 1.

In addition, since the chain guide unit 30 is made of soft synthetic resin or rubber, the chain 3 may be firmly supported without slipping. That is, the automatic welding head 2 may be continuously moved at a constant speed without being stopped.

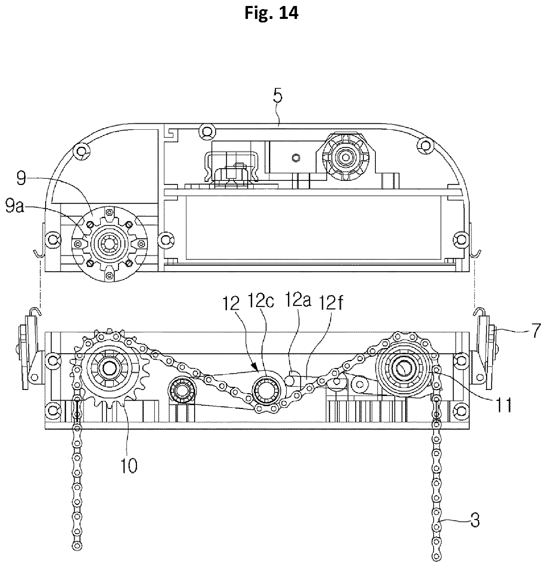

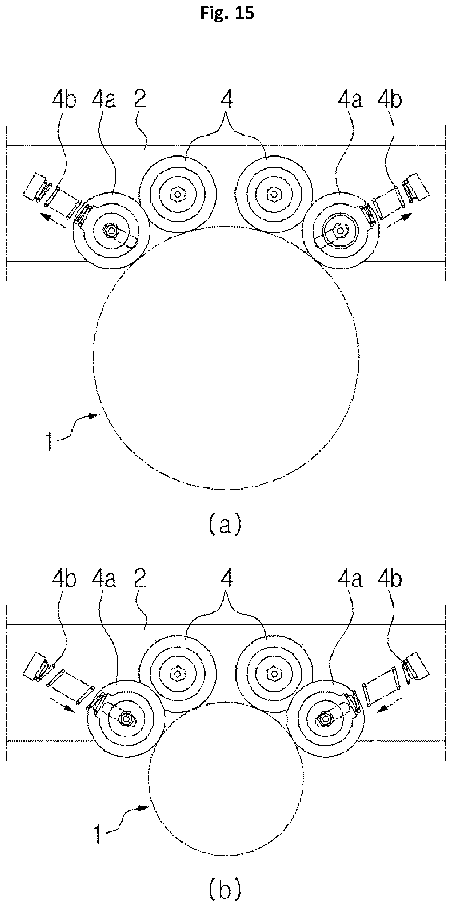

As illustrated in FIGS. 14 and 15, the present invention includes an auxiliary wheel 4a supported on the pipe 1 together with the wheel 4 and an elastic portion 4b for elastically supporting the auxiliary wheel 4a.

There are a plurality of wheels 4 which are spaced at regular intervals, and there are a plurality of auxiliary wheels 4a, which are positioned outside the wheels 4.

The elastic portion 4b may be configured by a compression spring having one end fixed to the auxiliary wheel 4a and the other end fixed to the automatic welding head 2.

Therefore, when the wheels 4 are supported on the pipe 1, the auxiliary wheels 4a elastically supported by the elastic portion 4b are supported on other parts of the pipe 1. That is, since the auxiliary wheels 4a together with the wheels 4 are supported on the pipe 1 and the supported area increases, the supported state of the automatic welding head 2 may be stably maintained.

In addition, the wheels 4 and the auxiliary wheels 4a may be stably supported even on pipes 1 having different diameters.

In the present invention configured as described above, the chain 3 is movably wound around the outer circumferential surface of the pipe 1 and the end of another pipe 1 faces the end of the pipe 1 while the chain 3 penetrates through the opening 6a of the automatic welding head 2.

Then, the slide rail 8 is moved left and right so that the welding machine 15 is positioned between the pipes 1. That is, a welding position by the welding machine 15 is accurately adjusted.

By driving the driving motor 9, the gear is rotated to move along the chain 3.

At this time, while the wheel 4 at the bottom of the automatic welding device 2 moves along the outer circumferential surface of the pipe 1, the welding machine 15 coupled to a welding slide rail 8 of the automatic welding head 2 welds a portion between the pipes 1.

On the other hand, in the present invention, a worker may remotely control welding through a monitor and a control device, which enables precisely adjusting welding while watching the monitor through a camera 16 installed on one side of the welding machine 15.

In addition, the automatic welding head 2 is constituted by the upper case 5 and the lower case 6, and constituted by one automatic welding head 2 through the fastener 7 in a state in which the drive motor 9, the driven gear 10, the guide roller 11, and the chain adjusting unit 12 are mounted.

That is, in a state in which the chain 3 movably passes through the opening 6a, the fastener 7 provided in the lower case 6, such as a cicada hook, is locked and fixed by the latch provided in the upper case 5, and as a result, the lower case 6 is coupled to the upper case 5.

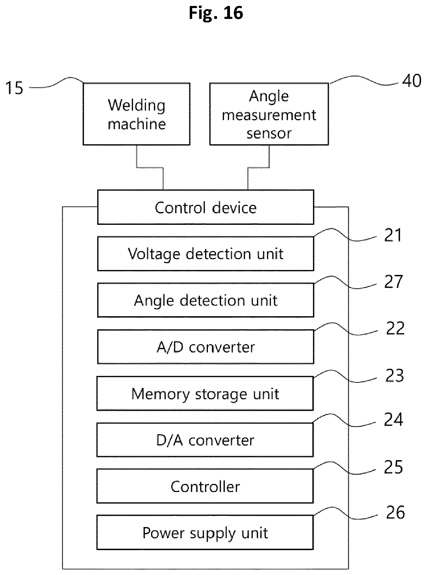

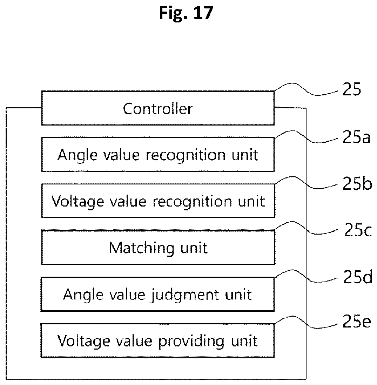

As illustrated in FIGS. 16 and 17, the control device is configured to include a voltage detection unit 21 connected to a current control volume terminal of the welding machine 15 and detecting a voltage value, an angle detection unit 27 detecting an angle value measured by an angle measurement sensor 40 provided in the automatic welding head 2, an A/D converter 22 converting an analog value of the voltage detection unit 21 into a digital value, a memory storage unit 23 receiving the digital value converted by the A/D converter 22 and storing the received digital value, a D/A converter 24 connected to an output terminal of the memory storage unit 23, and converting the digital value into the analog value, and sending the analog value to the welding machine again, a controller 25 receiving the digital value stored in the memory storage unit 23 and controlling the welding machine 15, and a power supply unit 26 controlled by the controller 25 and supplying an operating power to each component.

First, the angle measurement sensor 40 is installed in the automatic welding head 2 which measures an angle according to an inclination of the automatic welding head 2 and provide the angle to the control device. Here, the angle measurement sensor 40 measures an angle value for an inclination generated as the automatic welding head 2 and the welding machine 15 rotate together.

The angle measurement sensor 40 may be configured to include a housing installed in the automatic welding head 2, a weight body movably provided inside the housing, multiple load cells distributed and fixed in various directions in the weight body and transmitting measured angle values to the control device, and an elastic body connecting the load cells to an inner wall of the housing.

After being freely moved in a state connected in four or eight directions by elastic bodies such as springs or rubber bands, the weight body may be returned to its original position by elasticity of the elastic bodies.

The load cell is configured by a strain gauge type or piezoelectric ceramic type sensor, and two load cells are arranged in each of the 4 or 8 direction positions of the weight body, and one load cell calculates an angle value of an X axis according to the inclination of the automatic welding head 2 and the other load cell calculates an angle value of a Y axis.

The controller 25 displays a control state on the monitor, and includes a angle value recognition unit 25a recognizing angle values measured by the angle measurement sensor 40 for each position of the automatic welding head 2 rotated along the pipe 1, a voltage value recognition unit 25b recognizing a voltage value applied to the welding machine 15 for each angle of the automatic welding head 2, a matching unit 25c matching the recognized angle value and voltage value and storing the matched angle value and voltage value as a reference angle value and a reference voltage value, an angle judgment unit 25d comparing the angle value measured by the angle measurement sensor 40 as the automatic welding head 2 rotates along the pipe 1 for welding the pipe 1 with the reference angel value and judging whether the angle value coincides with the reference angle value, and a voltage value providing unit 25e providing the reference voltage value matching the reference angle value judged to coincide with the angle value to the welding machine 15.

Therefore, welding is performed on the pipe 1 while rotating the welding machine 15 in a state where the welding machine 15 is initially installed on the pipe 1, but the angle value according to the position of the welding machine 15 is measured by the angle measurement sensor 40 and detected by the angle detection unit 27, and when the voltage values applied to the welding machine 15 are detected by the voltage detection unit 21 for each angle according to the position of the welding machine 15, the angle value and the voltage values are set as the reference angle value and the reference voltage value, and stored in the memory storage unit 23 as the digital values.

And, in the case of welding later, when welding is performed on the pipe 1 while rotating the automatic welding head 2 in a state where the automatic welding head 2 is installed on the pipe 1, reference voltage values are provided to the welding machine 15 according to the reference angle value stored in the memory storage unit 23 as the digital value, so current may be adjusted in the welding machine 15.

That is, in the case of welding, the voltage is highest when the welding machine 15 is positioned at an upper portion of the pipe 1, and is gradually lowered when the automatic welding head 2 is rotated to one side of the pipe 1 and positioned to the side, and further lowered when the automatic welding head 2 is located at the lower part of the pipe 1. Continuously, when the automatic welding head 2 is rotated to the other side of the pipe 1 and located at the upper portion of the pipe 1 again, the voltage becomes higher again.

At this time, when the voltage increases while the welding machine 15 is located above the pipe 1, the current also increases, so that the wire melts and permeates through the pipe 1 to a lower portion. In addition, when the voltage is lowered while the welding machine 15 is located at the lower portion of the pipe 1, the current is also lowered, so that the wire melts and permeates upward through the gap between the pipes 1. As a result, the welding of the pipe 1 is performed evenly and precisely, so that defects do not occur.

The operation of the present invention configured as described above will be described.

In the present invention, the controller 25 is connected to an operating switch of the welding machine 15 while connecting the voltage detection unit 21 to the current control volume terminal of the existing welding machine 15. In addition, the angle measurement sensor 40 is also connected to the controller 25.

In addition, the analog voltage detected by the voltage detector 21 is detected in real time and automatically converted into the digital value through the A/D converter 22, and the angle value measured by the angle measurement sensor 40 is also converted into the digital value and stored in the memory storage unit 23.

At this time, the digital value stored in the memory storage unit 23 is sent to the controller 25, and the controller 25 controls the current by providing a voltage value to the welding machine 15 according to the angle value.

Therefore, after the digital value controlled by the controller 25 is stored in the memory storage unit 23, the digital value is converted back to the analog value through the D/A converter 24 and sent to the current control volume terminal of the welding machine 15.

At this time, power through the power supply unit 26 is supplied to the voltage detection unit 21, the A/D converter 22, the memory storage unit 23, the controller 25, and the like, and is used as operating power.

That is, in the present invention, when the analog voltage value and the angle value of the welding machine 15 are detected, converted into digital values, and stored in the memory storage unit 23, the worker stores the current value and the angle value of the welding machine 15 through the controller 25, and then converts the current value and angle value into the analog values again through the D/A converter 24 to precisely control the welding machine 15 with a voltage value suitable for the angle of the welding machine 15.

At this time, a numerical value controlled by the controller 25 is displayed through an LED display unit connected to the controller 25, so that the worker may easily grasp the current value or the currently controlled numerical value of the wire or the memory storage unit.

On the other hand, the welding machine 15 is equally applicable to all welding machines having outputs of 100A, 300A, 500A, and 1000A.

As described above, the present invention has a feature of rotatably installing the automatic welding device 2 on the pipe 1 and performing precise welding while remotely controlling the automatic welding device 2 through the monitor and the controller.

The embodiment of the automatic pipe welding system of the present invention described above is only an example, and various modifications and other equivalent embodiments may be made therefrom by those skilled in the art, as well as the scope of the present invention. The technical protection scope is defined by the technical spirit of the appended claims, and should be understood to include the spirit of the present invention defined by the claims and all modifications, equivalents, and substitutes within the scope thereof.

## Claims

1. An automatic welding system for a pipe wherein an automatic welding head 2 is rotatably installed on a pipe 1 and welding is performed with a welding machine 15, and a chain 3 is wound around and thereby installed on the pipe 1, the automatic welding head 2 is rotatably installed along the chain 3, the chain 3 is movably passed through openings 6a formed on both sides of the automatic welding head 2, the chain 3 is guided by a guide roller 11 while being wound around a gear driven to rotate by a driving motor 9 provided in the automatic welding head 2, and the pipe 1 is precisely welded using the welding machine 15 which is adjusted in position by a position adjustment unit of the automatic welding head 2 under the control of a control device while wheels 4 provided in the automatic welding head 2 rotate along the pipe 1.

2. The automatic welding system for a pipe of claim 1, wherein the automatic welding head 2 includes a driving motor 9 driven to move the chain 3, a driving gear 9a rotated by the driving motor 9 and on which one side of the chain 3 is wound, a guide roller 11 spaced apart from the driving gear 9a and guiding the other side of the chain 3, and a chain adjusting unit 12 pressing the chain 3 while being installed between the driving gear 9a and the guide roller 11 and maintaining the tension state to make the chain 3 be in close contact with the pipe 1.

3. The automatic welding system for a pipe of claim 2, wherein the chain adjusting unit 12 includes a rotating frame 12b having one end rotatably provided on one side of the automatic welding head 2 and a latch 12a formed on the other end, a chain presser 12c for pressurizing the chain 3 in a state provided in the rotating frame 12b, a handle 12d rotatably provided on the other side of the automatic welding head 2 while being spaced apart from the rotating frame 12b, a nut portion 12e rotatably provided in the handle 12d, and a locking portion 12f that is locked on the latch 12a of the rotating frame 12b in a screwed state to the nut portion 12e, and the locking portion 12f has a ring locked on the latch 12a at one end and a screw shaft screwed to the nut portion 12e at the other end.

4. The automatic welding system for a pipe of claim 1, wherein the position adjusting unit includes a slide rail 8 which is provided to be slidable on the automatic welding head 2 and has an end to which the welding machine 15 is fixed, a guide rail 8a moving movement of the slide rail 8, a guide block 8b fixed to one side of the slide rail 8 and having a screw hole, a screw shaft 8c coupled to the screw hole of the guide block 8b, and a movement motor 8d rotating the screw shaft 8c while being provided in the automatic welding head 2.

5. The automatic welding system for a pipe of claim 1, comprising
a chain guide unit 30 wound around and installed on the pipe 1, and wound with the chain 3 and guided, wherein the chain guide unit 30 is formed in the form of a belt so as to be wound around the pipe 1, and has wire grooves 31 for winding wires on both sides, and a chain groove 32 on which the chain 3 is to be wound between the wire grooves 31.

6. The automatic welding system for a pipe of claim 5, wherein the wire groove 31 is formed concavely in a semicircular cross section.

7. The automatic welding system for a pipe of claim 5, wherein the chain groove 32 is formed in a 'U' shape in cross section and a bottom surface is formed flat, and since the chain guide unit 30 is made of soft synthetic resin or rubber, the chain 3 is firmly supported without slipping.

8. The automatic welding system for a pipe of claim 1, comprising
an auxiliary wheel 4a supported on the pipe 1 together with the wheel 4 and an elastic portion 4b for elastically supporting the auxiliary wheel 4a,
wherein there are a plurality of wheels 4 which are spaced at regular intervals, and there are a plurality of auxiliary wheels 4a, which are positioned outside the wheels 4, and the elastic portion 4b may be configured by a compression spring having one end fixed to the auxiliary wheel 4a and the other end fixed to the automatic welding head 2.

9. The automatic welding system for a pipe of claim 1, wherein the control device is configured to include a voltage detection unit 21 connected to a current control volume terminal of the welding machine 15 and detecting a voltage value, an angle detection unit 27 detecting an angle value measured by an angle measurement sensor 40 provided in the automatic welding head 2, an A/D converter 22 converting an analog value of the voltage detection unit 21 into a digital value, a memory storage unit 23 receiving the digital value converted by the A/D converter 22 and storing the received digital value, a D/A converter 24 connected to an output terminal of the memory storage unit 23, and converting the digital value into the analog value, and sending the analog value to the welding machine again, and a controller 25 receiving the digital value stored in the memory storage unit 23 and controlling the welding machine 15.

10. The automatic welding system for a pipe of claim 9, wherein an angle measurement sensor 40 is installed in the automatic welding head 2, which measures the angle according to an inclination of the automatic welding head 2 and provides the measured angle to the control device, and the controller 25 displays a control state on the monitor, and includes a angle value recognition unit 25a recognizing angle values measured by the angle measurement sensor 40 for each position of the automatic welding head 2 rotated along the pipe 1, a voltage value recognition unit 25b recognizing a voltage value applied to the welding machine 15 for each angle of the automatic welding head 2, a matching unit 25c matching the recognized angle value and voltage value and storing the matched angle value and voltage value as a reference angle value and a reference voltage value, an angle judgment unit 25d comparing the angle value measured by the angle measurement sensor 40 as the automatic welding head 2 rotates along the pipe 1 for welding the pipe 1 with the reference angel value and judging whether the angle value coincides with the reference angle value, and a voltage value providing unit 25e providing the reference voltage value matching the reference angle value judged to coincide with the angle value to the welding machine 15.
